# EUROPÄISCHE PATENTSCHRIFT

(11) **EP 1 309 242 B1**
(45) Veröffentlichungstag und Bekanntmachung des Hinweises auf die Patenterteilung: **07.12.2005**
(21) Anmeldenummer: 01945232.5
(22) Anmeldetag: 01.06.2001
(51) Int. Cl.: A22B 5/00, A22C 17/00

(54) **VORRICHTUNG ZUM AUSSCHÄLEN VON KOTELETTSTRÄNGEN**
DEVICE FOR DEBONING MEAT SLABS FOR CUTLETS
DISPOSITIF PERMETTANT DE DESOSSER UNE PIECE DE VIANDE POUR COTELETTES

(30) Priorität: 28.07.2000 DE 10037300
(43) Veröffentlichungstag der Anmeldung: 14.05.2003
(73) Patentinhaber: SCHMID & WEZEL GmbH & Co., D-75433 Maulbronn (DE)
(72) Erfinder: MERKLE, Ulrich, 70192 Stuttgart (DE)
(74) Vertreter: Dreiss, Uwe
(86) Internationale Anmeldenummer: PCT/EP2001/006235
(87) Internationale Veröffentlichungsnummer: WO 2002/009526

(56) Entgegenhaltungen:
- EP-A- 1 023 840
- WO-A-95/17825
- WO-A-97/17853
- DE-U- 29 910 490

## Beschreibung

Die Erfindung geht aus von einem Stand der Technik, wie er in der DE 299 10 490 U1 angegeben ist. Dieser ist in Fig. 1 wiedergegeben.

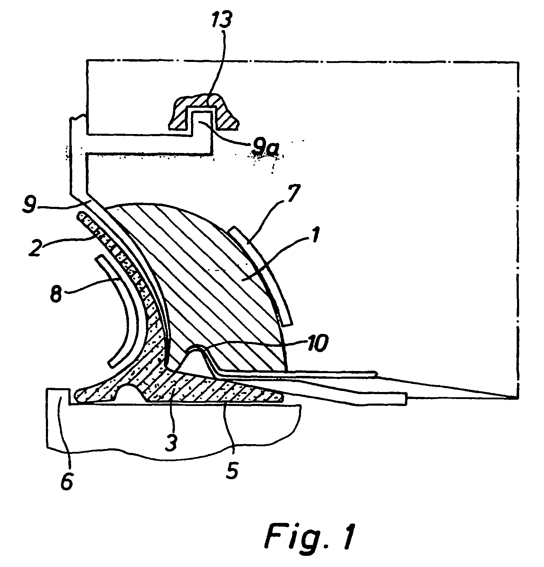

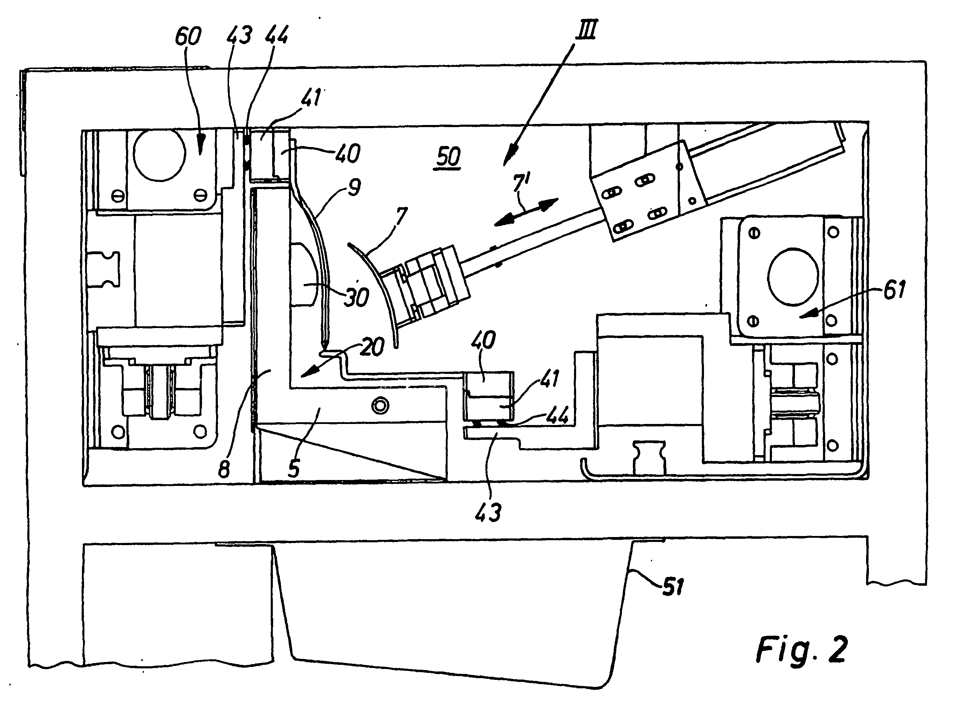

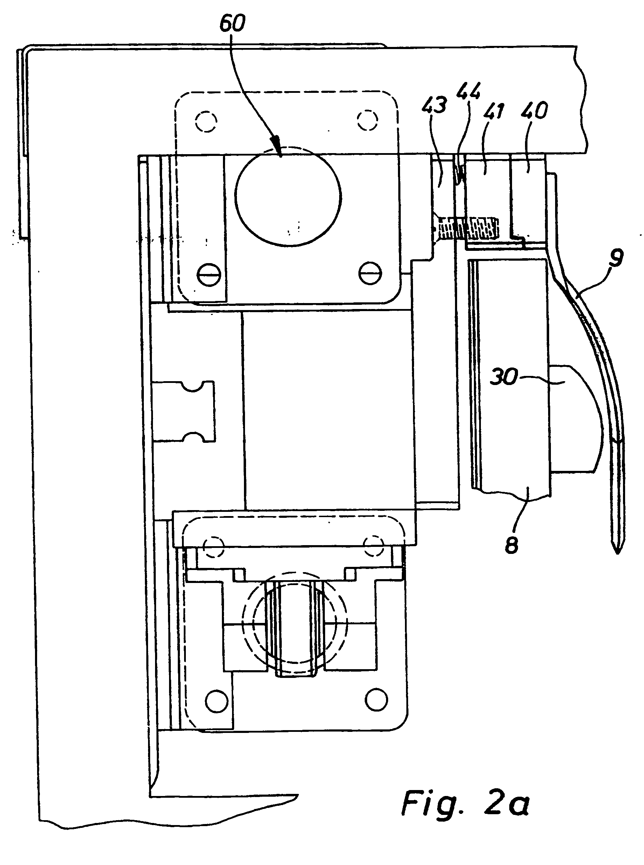

Die dort gezeigte Vorrichtung dient dazu, einen Kotelettstrang 1 aus den Rippen 2 und den Federn 3 eines Teils eines Tiers herauszuschälen. Dies erfolgt mit Hilfe von Klingen 9 und 10, die mit einem (aus Fig. 1 nicht ersichtlichen) Linearantrieb entlang den Rippen und den Federn des Kotelettstrangs in einer Richtung geführt werden, die im Wesentlichen senkrecht zur Zeichenebene verläuft. Der Kotelettstrang liegt auf einer Auflageplatte 5 und ist in seiner Lage durch einen seitlichen Anschlag 6 und eine seitliche Führungsplatte 8 fixiert, gegen die er durch eine Andrückplatte 7 gedrückt wird. Dies ist durch geeignete Einrichtungen (nicht gezeigt) entsprechend verstellbar und feststellbar. Während der Bewegung in Längsrichtung des Kotelettstranges (senkrecht zur Zeichnungsebene) wird die Klinge 9 dadurch geführt, dass ein mit ihr verbundener Führungsteil 9a in einer Klingenführung 13 geführt ist, deren Verlauf derart bestimmt ist, dass man dem natürlichen Verlauf der Trennebene zwischen den Rippen 2 und dem Kotelettstrang 1 möglichst nahe kommt (siehe DE 299 10 490 U1, Fig. 2).

Aufgabe der Erfindung ist es, die dargestellte Einrichtung zu vereinfachen und zu verbessern. Als Vereinfachung ist ein Aufbau anzusehen, der es ermöglicht, die Teile, mit denen der Kotelettstrang beim Ausschälen in Berührung kommt, einfach auszuwechseln und Reinigung zuzuführen ist. Gleichzeitig soll gewährleistet sein, dass auch bei durch die natürliche Konstitution der Schlachttiere bedingt unterschiedlichen Tierteilen eine möglichst exakte Abtrennung des Kotelettstrangs erfolgt, um möglichst alles Fleisch nutzen zu können.

Die Lösung dieser Aufgabe erfolgt mit den im Kennzeichen des Patentanspruches 1 angegebenen Mitteln. Vorteilhafte Weiterbildungen sind in den Unteransprüchen definiert.

Im Folgenden wird ein Ausführungsbeispiel der Erfindung unter Bezugnahme auf die beigefügten Zeichnungen näher beschrieben. Es stellen dar:
- Fig. 2: schematisch ein Ausführungsbeispiel, entsprechend den Pfeilen II-II in Fig. 3;
- Fig. 2a: ein Detail von Fig. 2;
- Fig. 3: einen Teilbereich des Ausführungsbeispiels entsprechend der Sicht in Richtung des Pfeils III in Fig. 2;

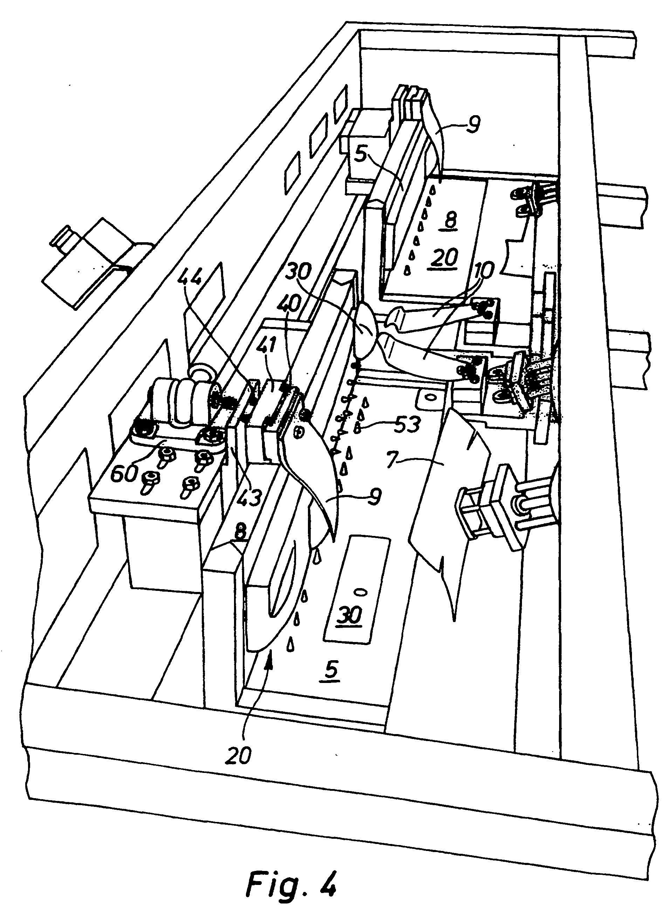

- Fig. 4: eine Ansicht des Ausführungsbeispiels von schräg oben vorne nach Fig. 2;
- Fig. 5: eine Ansicht ähnlich der nach Fig. 4, jedoch von der Rückseite, so dass sich die Winkelstücke 20 nicht links (wie in Fig. 4), sondern nunmehr rechts befinden;
- Fig. 6: die Aufhängung der Klinge 9;
- Fig. 7: das Herausnehmen des Winkelstückes 20;
- Fig. 8: das Winkelstück 20.

Fig. 1 ist ein Schnitt quer zur Längsrichtung, wobei der Kotelettstrang 1 selbst nicht eingezeichnet ist. Seine Lage ist aber leicht vorstellbar, denn er wird so eingelegt, dass - analog zu Fig. 1 - die Federn 3 auf der Auflageplatte 5 aufliegen und die Rippen 2 seitlich an der Führungsplatte 8 anliegen und der Kotelettstrang gegen diese beiden Flächen durch die Andrückplatte 7 angedrückt wird. Die Andrückplatte 7 ist pneumatisch in Richtung des eingezeichneten Doppelpfeils 7' verstellbar und feststellbar. Das Ausschälen des Kötelettstranges von den Rippen 2 erfolgt mittels der Trennklinge 9 von den Federn 3 mittels der Trennklinge 10, wobei die Trennklinge 9 im Wesentlichen vertikal und die Trennklinge 10 im Wesentlichen horizontal angeordnet ist. Beide sind mittels Linearantrieben 60, 61 senkrecht zur Zeichenebene verschiebbar.

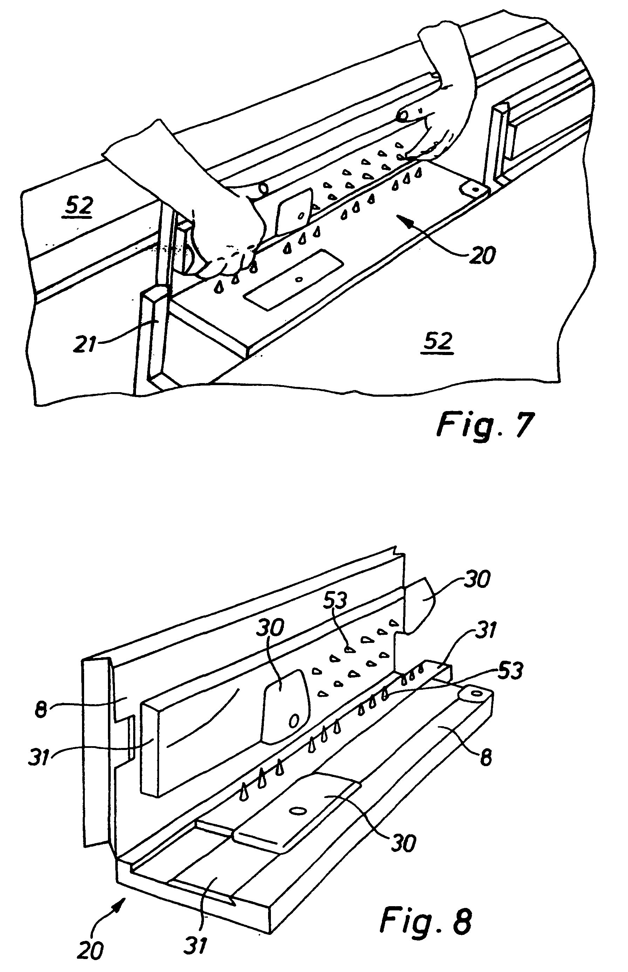

Die seitliche Führungsplatte 8 und die Auflageplatte 5 bilden integral zusammen ein 90 ° Winkelstück 20, das, wie in Fig. 9 dargestellt, nach oben aus einer Halterung 21 herausgenommen werden kann. Der Vorgang des Herausnehmens ist in Fig. 7 dargestellt.

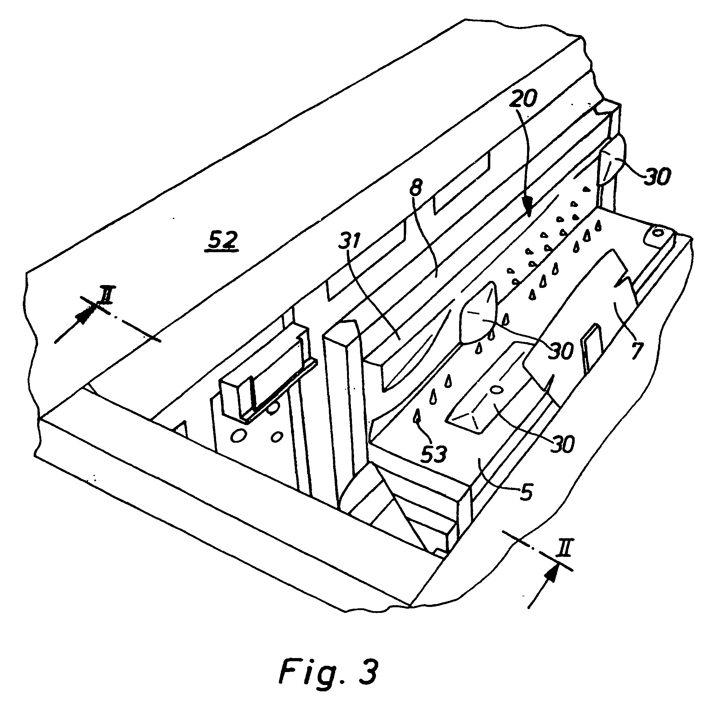

An der seitlichen Führungsplatte 8 sind Anpassungsstücke 30 angebracht (vgl. auch Fig. 3 und 8), die zusammen mit dem in Längsrichtung ebenfalls sich ändernden Querschnitt der Führungsplatte 8 ein Profil ergeben, das dem natürlich gewachsenen Verlauf des Kotelettstranges (mit Feder, Rippen) entspricht. Durch entsprechende Gestaltung und Positionierung dieser Anpassungstücke 30 wird erreicht, dass bei linearer Bewegung der Trennklinge 9 ein möglichst exakter Schnitt am Knochen der Rippen 2 erfolgt. Wie aus Fig. 8 zu ersehen, sind die Anpassungsstücke 30 auf einer Leiste 31 angeordnet, die in der Führungsplatte 8 mit Hilfe einer Schwalbenschwanzführung verschiebbar ist.

Entsprechende Anpassungsstücke 32 sind auch an der Auflageplatte 5 vorgesehen (vgl. Fig. 3, 8). Da die Leisten 31 in der Führungsplatte 8 und/oder in der Auflageplatte 5 verschiebbar und damit auswechselbar sind und da das gesamte Winkelstück 20 leicht aus der Halterung 21 herausnehmbar ist, kann der gesamte Auflagebereich leicht entnommen und schnell gereinigt werden.

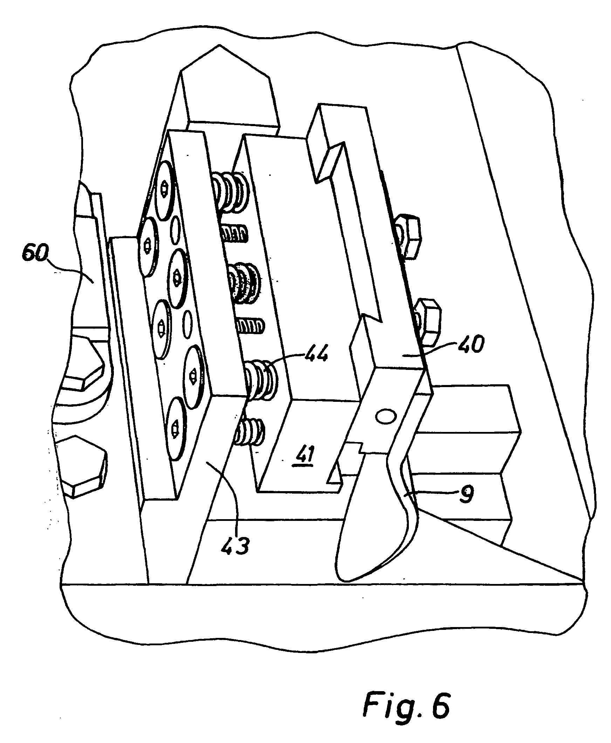

Ein weiteres Merkmal der Erfindung ist die federnde Aufhängung der Klingen 9 bzw. 10. Die Klinge 9 sitzt, wie aus Fig. 2 zu ersehen, auf einem Block 40. Dieser ist, wie aus Fig. 6 zu ersehen, an einem Block 41 mit Hilfe einer Schwalbenschwanzführung 42 höhenverschiebbar und feststellbar gelagert. Der Block 41 wiederum ist an einer Platte 43 so gelagert, dass die Blöcke 40, 41 und mit ihnen die Klinge 9 von Druckfedern 44 in die gezeigte Position gedrückt werden, aber dieser gegenüber in alle Richtungen begrenzt verschwenkbar sind, so dass sie sich stets an die Knochen von Rippe und Feder anlegen. Die Druckfedern 44 sind zwischen der Platte 43 und dem Block 41 angeordnet. Durch die Platte 43 hindurch sind Schrauben 45 im Block 41 verschraubt, in den Löchern in der Platte 43 jedoch beweglich. Damit wird gewährleistet, dass wirklich alles Fleisch ausgeschält wird.

Auf analoge Weise ist die Klinge 10 gelagert. Die Klingen 9 und 10 haben eine bestimmte angepasste, aus Fig. 2 ersichtliche Form und sind auf spezielle Art geschliffen.

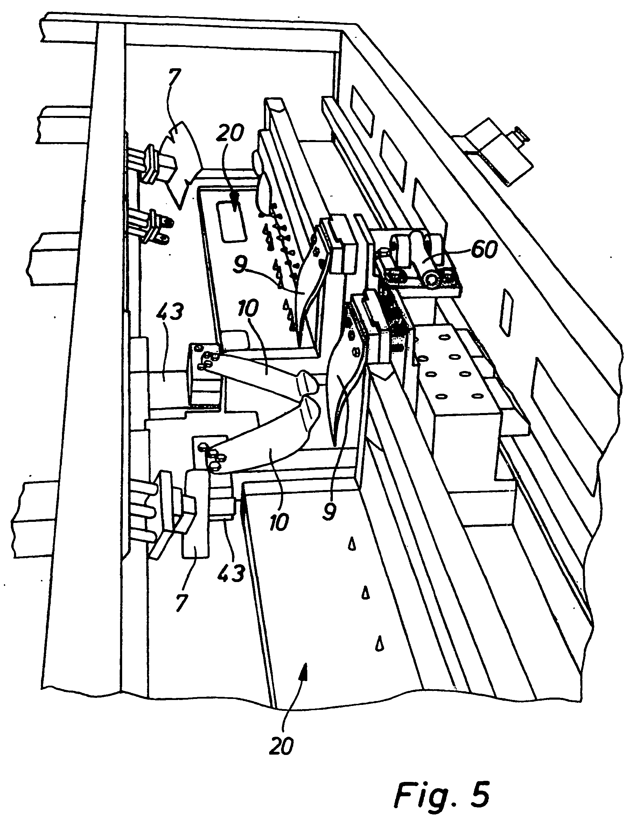

Wie aus Fig. 5 zu ersehen ist, sind in dem Maschinenrahmen zwei Winkelstücke 20 linear hintereinander angeordnet. Jedem Winkelstück 20 ist eine Klinge 9 und eine Klinge 10 zugeordnet. Die Platten 43 für die beiden Klingen 10 und für die beiden Klingen 9 sind aus der in Fig. 5 gezeigten Position gleichzeitig nach außen hin mittels der Linearantriebe 60, 61 verfahrbar.

Zusammenfassend lassen sich also die Vorteile dahingehend beschreiben: Die Klingen 9, 10 sind "federnd" angeordnet, damit sie sich während ihrer Linearbewegung an die Rippenknochen anpassen können. Gleichzeitig sind die Anlagen für den Kotelettstrang durch Aufbauten in Form von Anpassungsstücken 30, 32 dreidimensional gestaltet, d. h. gegenüber den horizontalen und vertikalen Flächen experimentell so bestimmt, dass sie jeweils für Gruppen von Kotelettarten (nach Tiertyp, Alter, Gewicht) im Wesentlichen gleich sind, damit die Klingen bei der Linearbewegung am Knochen entlang schneiden.

Die Auflagen bilden ein 90^{o}-Winkelstück 20 aus lebensmittelverträglichem Kunststoff, das austauschbar ist. Die Austauschbarkeit dient einerseits der besseren Möglichkeit zur Reinigung, aber auch dazu, entsprechend verschieden gestaltete und an verschiedenen experimentell bestimmte Formen von Kotelettsträngen angepasste Winkelstücke 20 schnell austauschen zu können.

Die hygienische Gestaltung ist aus Fig. 3 ersichtlich. Die Anordnung befindet sich in einem Graben 50, in den von oben her die Kotelettstränge eingelegt und aus dem sie auch wiederum nach oben entnommen werden können und in dem die Klingen 9, 10 linear verschiebbar sind. Nach unten ist dieser Graben offen bis hin zu einer Wanne 51 (vgl. Fig. 2), die herabfallenden Abfall aufnimmt und Auslassöffnungen aufweist. So ist die gesamte Anordnung von oben her mit einem Wasserschlauch auch leicht zu reinigen. Die Abdeckung der Bereiche zu beiden Seiten des Grabens erfolgt durch entsprechend großflächige Abschirmbleche 52.

### Bezugszeichenliste

- 1: Kotelettstrang
- 2: Rippe
- 3: Feder
- 5: Auflageplatte
- 6: seitlicher Anschlag
- 7: Andrückplatte
- 7': Doppelpfeil
- 8: seitliche Führungsplatte
- 9: Trennklinge
- 9a: Führungsteil
- 10: Trennklinge
- 13: Klingenführung
- 20: Winkelstück
- 21: Halterung
- 30: Anpassungsstück
- 31: Leiste
- 32: Anpassungsstück
- 40: Block
- 41: Block
- 42: Schwalbenschwanzführung
- 43: Platte
- 44: Feder
- 45: Schraube
- 50: Graben
- 51: Wanne
- 52: Abschirmblech
- 53: Haltestift
- 60, 61: Linearantriebe

## Patentansprüche

1. Vorrichtung zum Ausschälen von Kotelettsträngen mit einer Auflageplatte und einer seitlichen Anlageplatte für den Kotelettstrang und mit linear entlang des Kotelettstranges verschiebbaren Klingen (9, 10), **dadurch gekennzeichnet, dass** die Auflageplatte (5) und die seitliche Anlageplatte (8) Teil eines Winkelstückes (20) sind, das aus einer Halterung (21) nach oben herausnehmbar ist.

2. Vorrichtung nach Anspruch 1, **dadurch gekennzeichnet, dass** an der Auflageplatte (5) und/oder an der seitlichen Führungsplatte (8) zur dreidimensionalen Anpassung an die Form des Kotelettstranges Anpassungsstücke (30, 32), vorzugsweise verstellbar, angeordnet sind.

3. Vorrichtung nach Anspruch 2, **dadurch gekennzeichnet, dass** die Anpassungsstücke (30, 32) mittels Schwalbenschwanzführungen verstellbar und austauschbar sind.

4. Vorrichtung nach einem der Ansprüche 1 bis 3, **dadurch gekennzeichnet, dass** zur Halterung des Kotelettstrangs in den Flächen (5, 8) der Anlageplatte (5) und/oder der seitlichen Führungsplatte (8) Haltestifte (53) angeordnet sind.

5. Vorrichtung nach einem der Ansprüche 1 - 4, **dadurch gekennzeichnet, dass** zur Anpassung an den natürlichen Verlauf des Kotelettstrangs die Klingen (9, 10) jeweils auf einem Halteteil (40) angeordnet sind, das gegenüber einer mit dem Linearantrieb dieser Klinge verbundenen weiteren Halteteil (43) gegen die Kraft von Federn (44) verschwenkbar gehalten wird.

6. Vorrichtung nach einem der Ansprüche 1 bis 5, **dadurch gekennzeichnet, dass** die Flächen der Vorrichtung beiderseits eines Grabens (50) durch Abschirmbleche (52) abgedeckt sind, und dass in dem Graben versenkt die Winkelstücke (20) mit den zugeordneten Linearantrieben (60, 61) für die Klingen (9, 10) angeordnet sind, und dass dieser Graben sich nach unten in eine Wanne (51) öffnet.

## Claims

1. Device for boning cutlet slabs having a support plate and a lateral contact plate for the cutlet slab and blades (9, 10) displaceable linearly along the cutlet slab, **characterised in that** the support plate (5) and the lateral contact plate (8) are portions of an elbow piece (20) which is upwardly removable from a holder (21).

2. Device according to claim 1, **characterised in that** adjusting members (30, 32) are arranged, preferably displaceably, on the support plate (5) and/or on the lateral guide plate (8) for three-dimensional adjustment to the shape of the cutlet slab.

3. Device according to claim 2, **characterised in that** the adjusting members (30, 32) are adjustable and interchangeable by means of dovetail guides.

4. Device according to one of the claims 1 to 3, **characterised in that** in order to hold the cutlet slab, holding pins (53) are arranged in the surfaces (5, 8) of the support plate (5) and/or the lateral guide plate (8).

5. Device according to one of the claims 1 to 4, **characterised in that**, in order to adapt to the natural form of the cutlet slab, each of the blades (9, 10) is arranged on a holding member (40) which is held pivotable relative to a further holding member (43) linked to the linear drive of the respective blade, against the force of springs (44).

6. Device according to one of the claims 1 to 5, **characterised in that** the surfaces of the device on either side of a trough (50) are covered over by screening panels (52) and that the elbow pieces (20) are arranged sunk in the trough with the associated linear drives (60, 61) for the blades (9, 10), and that this trough opens downwardly into a sump (51).

## Revendications

1. Dispositif pour le désossage de trains de côtelettes, comportant un plateau de pose (5) et une plaque d'appui latérale (8) pour le train de côtelettes et comportant des lames de coupe (9, 10) mobiles linéairement le long du train de côtelettes, **caractérisé en ce que** le plateau de pose (5) et la plaque d'appui latérale (8) sont des parties d'une cornière (20), qui peut être retirée vers le haut hors d'un support 21.

2. Dispositif selon la revendication 1, **caractérisé en ce que** sur le plateau de pose (5) et/ou sur la plaque de guidage latérale (8) sont agencés, de préférence de manière réglable, des éléments d'adaptation (30, 32) en vue d'une adaptation tridimensionnelle à la forme du train de côtelettes.

3. Dispositif selon la revendication 2, **caractérisé en ce que** les éléments d'adaptation (30, 32) sont réglables et remplaçables au moyen de guidages en queue d'aronde.

4. Dispositif selon l'une quelconque des revendications 1 à 3, **caractérisé en ce que**, pour maintenir le train de côtelettes, des tétons de retenue (53) sont agencés dans les surfaces (5, 8) du plateau de pose (5) et/ou de la plaque de guidage latérale (8).

5. Dispositif selon l'une quelconque des revendications 1 à 4, **caractérisé en ce que**, pour s'adapter au contour naturel du train de côtelettes, les lames de coupe (9, 10) sont agencées respectivement sur un élément de support (40) qui est maintenu de manière à pouvoir pivoter à l'encontre de la force exercée par des ressorts (44) par rapport à un autre élément de support (43), relié au système d'entraînement linéaire de ladite lame de coupe.

6. Dispositif selon l'une quelconque des revendications 1 à 5, **caractérisé en ce que** les surfaces du dispositif sont recouvertes de part et d'autre d'une fosse (50) par des plaques de protection (52), et **en ce que** les cornières (20) avec les systèmes d'entraînement linéaire (60, 61) pour les lames de coupe (9, 10) sont agencées en profondeur dans la fosse (50), et **en ce que** cette fosse (50) s'ouvre vers le bas dans une cuve (51).
